# EUROPEAN PATENT SPECIFICATION

(11) **EP 0 477 157 B1**
(45) Date of publication and mention of the grant of the patent: **03.01.1996**
(21) Application number: 91850218.8
(22) Date of filing: 09.09.1991
(51) Int. Cl.: A61C 13/00, A61C 5/10

(54) **Artificial tooth veneer restorations**
Zahnrestaurierungen mit einem künstlichen Belag
Restauration dentaire par revêtement artificiel

(30) Priority: 17.09.1990 SE 9002959
(43) Date of publication of application: 25.03.1992
(73) Proprietor: SANDVIK AKTIEBOLAG, S-811 81 Sandviken 1 (SE); Nobelpharma AB, S-402 26 Göteborg (SE)
(72) Inventor: Odén, Agneta, S-182 74 Stocksund (SE); Andersson, Matts, S-443 39 Lerum (SE)
(74) Representative: Östlund, Alf Olof Anders

(56) References cited:
- EP-A- 0 375 647
- EP-A- 0 384 908
- EP-A- 0 389 461

## Description

This invention relates to methods of manufacturing accurately shaped artificial veneer restorations for natural teeth from a high strength ceramic material with powder technological methods.

Veneer restorations can be fixed on natural teeth for e.g. esthetical reasons if the natural teeth are for some reason discoloured. Veneer restorations can be made by using conventional dental porcelain technique on a model from the prepared tooth, as described, for example, in EP-A-0 384 908 for tooth restoration artificial units in general. The model material has no dimensional changes of importance at temperatures up to 1200°C. When the veneer restoration is ready, the model material is removed by sand blasting.

The problem with the ceramic material now used (dental porcelain) in veneer restorations is their brittleness, which often gives early fracture.

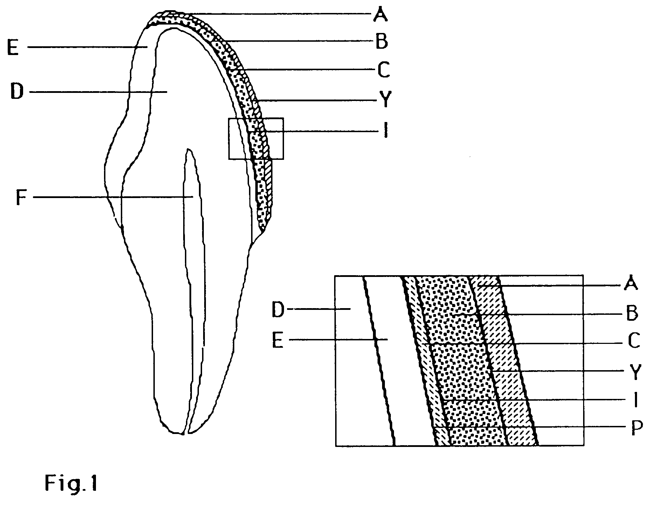

Fig 1 shows a cross section of a tooth with a veneer restoration. In this figure A= porcelain fired to the core, B=core made of a densely sintered ceramic, Y=external surface of the core, I= internal surface of the core, P= the prepared surface of the tooth, C= cement, E= enamel, D= dentin and F= pulp.

One object of the present invention is to provide artificial veneer restorations, which have higher strength and accuracy to shape.

Another object is to make a veneer restoration by using densely sintered, high strength ceramic material, provided that the demand of high strength, accuracy to shape (that means compensate for the shrinkage during sintering) can be combined with the demand on the application of porcelain concerning firing, adherence, biocompatibility and esthetics.

According to the invention artificial veneer restorations can be made, in which the core is manufactured in a biocompatible material where the internal surface of the core has been given such shape as to fit to a prepared facial surface of a tooth. The material of the core must not give any discolourations or other unwanted effects to the dental porcelain, which usually is fired on the external surface of the core. The veneer restorations are fixed to the prepared surface by cementation. With the aid of gypsum models of the two jaws and with the manufactured core on the model of the preparation the dental technician can make the final design of the external surface (Y) of the veneer restoration by grinding and polishing the core. In order to have a more natural surface of the veneer restoration a thin layer (>50 µm) of dental porcelain can be fired on the external surface of the core (Y). The method of manufacturing a tooth veneer restoration for a prepared facial surface of a natural tooth according to the invention increases the strength and accuracy for these restorations.

Cores according to the invention can be made, following the method defined in claim 1, from a body of for instance dental porcelain, glass ceramic or apatite ceramic by copy milling an impression from the prepared surface (P). This copy milling gives the boundary surface of the veneer restoration (I) to the prepared surface (P). An impression is made of the prepared tooth or this tooth together with its adjacent teeth. The impression material adheres to the whole prepared surface and when the impression is removed from the teeth, this impression contains the surface (P), which will give the surface I and the contact points to the adjacent teeth. From the impression the surface (I) is prepared in order to have this surface within reach for copy milling. The contacts with the adjacent teeth give the limitation of the veneer restoration in mesial-distal direction. The external contour outside the impression of the prepared surface (P) is prepared manually with conventional dental technical machining practice or by copy milling. An impression can be e.g. a Kerr impression, impression with a dental composite, or a silicon impression.

Preferably the core according to the invention is made from a biocompatible densely sintered, high strength ceramic material. Porcelain is fired on the core obtained, so that the final product will be a tooth veneer restoration, which will fit to existing tooth preparation and esthetically and functionally to the actual whole set of teeth.

As can be seen from fig. 1 artificial veneer restorations are made as a core in densely sintered ceramic (B) with a fired thin layer of dental porcelain (A). The veneer restoration is fixed to the prepared surface (P) by e.g. cementing. The thin layer of cement (C) connects the prepared tooth surface (P) with the internal surface of the core (I) which fits with high accuracy against the prepared surface (P). The layer of cement can have a thickness < 100µm preferably 25-50 µm. The cementing of the veneer restorations can be made with e.g. some resin-based cement. It can be an advantage to silane treat the surfaces (I) of the veneer restoration which will be joined with the prepared surfaces of the tooth structure (P). It can also be an advantage to etch the enamel parts (E) of the prepared surface (P). Etching medium can be e.g. phosphoric acid. Dentin parts of the prepared surface can before cementing be treated with some dentin adhesive.

The ceramic powder can be made by several for the man of the art well known methods. Conventional powder technology can be used, where the different components are mixed and milled under dry or wet conditions with water or an inorganic solvent (e.g.alcohols) as milling liquid. So called SOL-GEL technique can also be used where different oxide materials are deposited together from a water solution or are coprecipitated from metal alcoxides in e.g. water free alcohol by controlled addition of water. Combination of different techniques can also be used by using SOL-GEL technique to deposit a surface layer of desired metal oxide on a powder material. To the ceramic slurry lubricants or other organic binders are added, when needed at suitable time in the process.

According to the invention artificial tooth veneer restorations now exist characterized in that they are manufactured from a ready to press powder with additions of lubricants and/or other organic binders. The powder is cold isostatically compacted, uniaxially pressed, slip cast, pressure cast, injection moulded or compacted in another way. The compacted body has such a dimension that it contains enough material for the copy milling of the outer shape of the core, which will fit to the prepared tooth surface. During this copy milling the sintering shrinkage must be considered. Thus, the copy milled surface must be enlarged so that after the subsequent sintering process to high density, the core has with great accuracy desired final geometrical external shape which will fit to the prepared tooth surface (P). The body can also be presintered before the copy milling of the surface (I), fitting to the prepared surface (P). All the other surfaces are prepared near final shape before the final sintering, which means a thickness of the veneer restoration of < 1 mm. In some places where the prepared tooth has larger damage the veneer restoration can be thicker. It is important that the ceramic material is sintered to closed porosity, which for an oxide material means at least 98% of theoretical density, but in order to ensure high mechanical strength the material should preferably have a density over 99%, while densities over 99.5% give the best strength. In some cases it can be suitable to use a finally sintered body, in which case the sintering shrinkage need not to be considered during the copy milling.

The core of the veneer restorations can also be made by cold isostatic pressing, uniaxial pressing, slip casting, pressure casting, injection moulding or compacting in another way against a body uniform with the prepared surface of the tooth (P) to which the veneer restoration will fit. This body is made by copy milling and at the same time enlargement from a model in gypsum of the prepared tooth. The body can be made from e.g. metallic material, graphite, plastic material and shall have such a size that the internal surface (I) of the veneer restoration after the sintering shrinkage has the desired fitting against the prepared tooth surface (P). The copy milled surface of the body will give the internal shape of the core (I). The external shape of the core (Y) is made by grinding and milling mostly before the sintering. After the sintering the external surface (Y) of the core (B) is adjusted by grinding so the veneer restoration fits to the prepared tooth and to the teeth in the two jaws.

The sintering takes place in vacuum or under hydrogen atmosphere, under normal atmospheric pressure or under increased pressure in connection with hot isostatic compaction. Highly pure Al₂O₃ becomes translucent during sintering to full density in vacuum or in hydrogen atmosphere, which is an advantage when natural teeth are to be imitated. Pure oxide material can be sintered in air, but some composites have to be sintered in inert or controlled atmosphere. The core is given an external shape so that the building-up of the dental porcelain is facilitated. The shape can also be such that it is roughly similar to natural teeth. After the final sintering the surfaces of the core may need some grinding, especially the external surfaces, which is made with the veneer restoration on a model of the prepared tooth. If dental porcelain is used the thermal expansion must be adapted to the material in the core. In the case of Al₂O₃ there will even be a "chemical" bond between Al₂O₃ and porcelain. This means that the external surface of the core does not need any retention elements. The core can also be given such a shape and colour that the veneer restoration does not need any dental porcelain layer. The surfaces of the veneer restoration which are a part of the external surface of the repaired tooth must in this case before the cementing be ground and polished to a surface roughness of 0.5-5µm preferably 0.5-1µm.

The ceramic base material in the core preferably comprises one or more biocompatible oxides (including phosphates, silicates and sulphates), with additives of carbides, silicides, nitrides or borides with or without binder metal. The base material can also comprise nitrides. oxynitrides, sulphides, oxysulphides or similar phases as well as ceramic substances containing halogens. Examples of biocompatible oxides, which can form base matrix for the ceramic body, are Al₂O₃, TiO₂, MgO, ZrO₂, and ZrO₂ with additives of up to 25 mole% preferably 10 mole% of Y₂O₃, MgO and/or CaO (partly or totally stabilized ZrO₂). In a preferred embodiment the ceramic material comprises >50% preferably >85% of Al₂O₃ with additives of conventional sintering aids. In order to increase the strength < 25weight % preferably 3 - 12 weight % of ZrO₂ can be added.

In order to get a suitable colour of the core (B), coloured components can be chosen. Additives e.g 0.1-10 weight % preferably 0.5-5 weight % of TiN and/or ZrN will give Al₂O₃ based teeth veneer restorations a faint yellow shade. Of course no additives shall be used, which will give unesthetic effects.

## Claims

1. Method of manufacturing an artificial tooth veneer restoration comprising a core (B) and a layer of porcelain (A) burnt to the veneer restoration by the use of powder technology, whereby the sintering shrinkage can be taken in account, **characterized** in that the internal surface (I) of the core (B) which will fit to a prepared tooth surface (P) is made by copy milling a body, preferably a pressed, presintered or sintered body, from an impression of the prepared tooth surface.

2. Method according to claim 1 **characterized** in that the core material is a high strength ceramic material with a relative density > 98%.

3. Method according to claim 2 **characterized** in that the ceramic material in the core is based on one or more of the oxides Al₂O₃, TiO₂, MgO, ZrO₂ or ZrO₂ with up to 25 mole% of Y₂O₃, MgO and/or CaO.

## Patentansprüche

1. Verfahren zur Herstellung einer künstlichen Zahnbelagrestaurierung mit einem Kern (B) und einer auf der Belagrestaurierung aufgebrannten Porzellanschicht (A) unter Verwendung von Pulvertechnologie, wobei der Sinterschrumpfung Rechnung getragen werden kann, **dadurch gekennzeichnet**, daß man die Innenoberfläche (I) des Kerns (B), welche auf eine präparierte Zahnoberfläche (P) paßt, durch Kopierfräsen eines Körpers, vorzugsweise eines gepreßten, vorgesinterten oder gesinterten Körpers, von einem Abdruck der präparierten Zahnoberfläche gewinnt.

2. Verfahren nach Anspruch 1, **dadurch gekennzeichnet**, daß das Kernmaterial ein Keramikmaterial hoher Festigkeit mit einer relativen Dichte > 98 % ist.

3. Verfahren nach Anspruch 2, **dadurch gekennzeichnet**, daß das Keramikmaterial in dem Kern auf einem oder mehreren der Oxide Al₂O₃, TiO₂, MgO, ZrO₂ oder ZrO₂ mit bis zu 25 mol-% Y₂O₃, MgO und/oder CaO basiert.

## Revendications

1. Procédé de fabrication d'une restauration dentaire artificielle comprenant une partie centrale (B) et une couche de porcelaine (A) chauffée sur la restauration en utilisant la technologie des poudres, qui permet de prendre en compte le rétrécissement dû au frittage, caractérisé en ce que la surface interne (I) de la partie centrale (B) qui s'adaptera à une surface dentaire préparée (P) est obtenue en réalisant une copie par fraisage d'un corps, de préférence un corps pressé, préfritté ou fritté, à partir d'une empreinte de la surface dentaire préparée.

2. Procédé selon la revendication 1 caractérisé en ce que le matériau de la partie centrale est un matériau de céramique de solidité élevée ayant une densité relative supérieure à 98%.

3. Procédé selon la revendication 2 caractérisé en ce que le matériau de céramique de la partie centrale est constitué d'un ou de plusieurs des oxydes Al₂O₃, TiO₂, MgO, ZrO₂ ou ZrO₂ contenant jusqu'à 25% molaires de Y₂O₃, MgO et/ou CaO.
